# EUROPÄISCHE PATENTSCHRIFT

(11) **EP 3 571 337 B1**
(45) Veröffentlichungstag und Bekanntmachung des Hinweises auf die Patenterteilung: **23.02.2022**
(21) Anmeldenummer: 18723507.2
(22) Anmeldetag: 09.05.2018
(51) Int. Cl.: D02G 3/02, D03D 15/00, B60D 5/00, F16P 3/02

(54) **TRÄGERMATERIAL FÜR EINEN FALTENBALG**
CARRIER MATERIAL FOR A BELLOWS
SUBSTRAT DESTINÉ À UN SOUFFLET-ACCORDÉON

(30) Priorität: 19.05.2017 DE 102017111024
(43) Veröffentlichungstag der Anmeldung: 27.11.2019
(73) Patentinhaber: Gustav Ernstmeier GmbH & Co. KG, 32049 Herford (DE)
(72) Erfinder: HAMBUSCH, Philipp, 32584 Löhne (DE)
(74) Vertreter: Schober, Mirko
(86) Internationale Anmeldenummer: PCT/EP2018/062005
(87) Internationale Veröffentlichungsnummer: WO 2018/210655

(56) Entgegenhaltungen:
- EP-B- 2 367 972
- WO-A1-2013/156787
- DE-A1- 4 007 862
- US-A1- 2014 272 361

## Beschreibung

### TECHNISCHES GEBIET

Die Erfindung betrifft ein Trägermaterial gemäß dem Oberbegriff von Anspruch 1. Weiterhin betrifft die Erfindung ein Faltenbalgmaterial mit den Merkmalen von Anspruch 10 sowie einen Faltenbalg mit einem solchen Faltenbalgmaterial gemäß den Merkmalen von Anspruch 12.

### STAND DER TECHNIK

Im praktischen Einsatz unterliegen Faltenbälge mitunter hohen mechanischen und thermischen Belastungen. Dabei weisen vor allem die Faltenkanten, Faltenecken bzw. Faltenzwickel einen hohen Verschleiß auf, dem - neben etwaigen abrasiven Einwirkungen - insbesondere deren dynamisches Knicken durch fortwährendes gegeneinander Verschwenken der Flanken jeder Falte zugrunde liegt. Aus DE 20 2014 003 941 U1 geht ein Trägermaterial für einen Faltenbalg hervor, welches ein Gewebe aus zumindest bereichsweise miteinander gekreuzten Fäden aufweist. Durch eine spezielle Bindungsformel für das Gewebe, die das Auslassen eines Kett- oder Schussfadens sowie diagonal verlaufende Fäden vorsieht, soll das Trägermaterial eine Entlastung erfahren.

Hierdurch konzentrieren sich die Knickbelastungen nicht auf die einzelnen Faltenkanten, Faltenecken bzw. Faltenzwickel, sondern werden auf demgegenüber breitere Bereiche des Trägermaterials verteilt. Hierzu liegt dem Gewebe eine mitunter aufwendige Bindungsformel zugrunde. Bei der Verwendung für Faltenbälge kann das vorgegebene Muster eine mitunter aufwendige Einhaltung der Strukturrichtung verlangen. EP 2 367 972 B1 beschreibt ein zweilagiges textiles Flächengebilde zur Verwendung für Faltenbälge sowie einen daraus gefertigten Faltenbalg. Das Gewebe sieht die Verwendung von Vectran-HS und Aramid vor. DE 40 07 862 A1 zeigt einen Faltenbalg, der eine unaufgeschnittene Doppelpolware aus Chemie- oder Mischfasergarnen umfasst.

### DIE ERFINDUNG

Der vorliegenden Erfindung liegt daher die Aufgabe zugrunde, ein gattungsgemäßes Trägermaterial sowie ein entsprechendes Faltenbalgmaterial und einen daraus gefertigten Faltenbalg dahingehend weiterzuentwickeln, dass deren Dauerbeständigkeit insgesamt erhöht ist.

Die Lösung dieser Aufgabe besteht nach der Erfindung in einem Trägermaterial mit den Merkmalen von Anspruch 1. Weiterhin wird diese Aufgabe durch ein Faltenbalgmaterial mit den Merkmalen von Anspruch 10 sowie durch einen Faltenbalg gemäß den Merkmalen von Anspruch 12 gelöst. Vorteilhafte Ausgestaltungen sind Gegenstand der jeweils abhängigen Unteransprüche.

Die Erfindung geht dabei von dem grundlegenden Gedanken aus, die Fäden des Gewebes aus gezwirntem oder nicht gezwirntem Garn zu bilden, der wenigstens Fasern aus aromatischem Polyester aufweist, welches insbesondere durch Polykondensation von 4-Hydroxybenzolsäure and 6-Hydroxynaphthalen-2-carboxyl-säure hergestellt ist. Die Faser ist bevorzugt damit aus einem Flüssigkristallpolymer (FKP bzw. LCP = "Liquid Crystal Polymer") mit folgender Molekularstruktur gebildet:

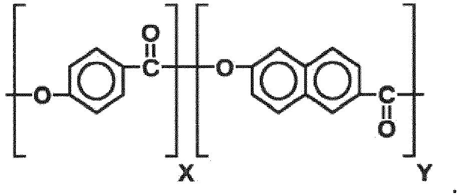

Der aromatische Polyester liegt als Fasermaterial vor, was dessen direkte Verwendung für textile Flächengebilde ermöglicht. Neben aromatischem Polyester umfasst das erfindungsgemäße Trägermaterial weitere Fasern aus wenigstens einem der nachfolgend genannten Materialien:
- Viskose
- Wolle
- Baumwolle
- aromatisches Polyamid, insbesondere Aramid.

Durch den Einsatz von aromatischem Polyester lassen sich überaus vorteilhafte Eigenschaften für das Trägermaterial erreichen, die sich in einer hohen Festigkeit, insbesondere Zugfestigkeit, und Weiterreißkraft sowie einer sehr guten Knickbeständigkeit äußern. Je nach Zusammensetzung des erfindungsgemäßen Trägermaterials konnte eine Beständigkeit von über 500.000 bis 1.000.000 Knickzyklen gem. Bally Test nach DIN 53351 erreicht werden, bis dieses einriss bzw. es zur Lochbildung kam. Handelsübliche Faltenbalgmaterialien weisen dagegen eine deutlich geringere Langlebigkeit auf, die von 40.000 bis 100.000 Knickzyklen gem. Bally Test nach DIN 53351 bis zum Versagen reicht.

Das Garn des Trägermaterials enthält 30% bis 60% aromatisches Polyester. Durch die Beschränkung auf diesen Bereich können die vorteilhaften Eigenschaften des Trägermaterials weiter verbessert werden.

Insbesondere kann das Garn 35% bis 45% an aromatischem Polyester enthalten, um ein bevorzugtes Verhältnis gegenüber dem restlichen Fasermaterial zu erhalten.

Besonders bevorzugt kann das Garn 40% an aromatischem Polyester enthalten.

In Bezug auf die Verwendung von aromatischem Polyamid als weiteres Fasermaterial kann das Garn des Trägermaterials 30% bis 50% aromatisches Polyamid enthalten. Das aromatische Polyamid kann generell als Aramid, insbesondere Paraaramid oder Metaaramid, vorliegen. Neben dessen hoher Festigkeit erweist sich aromatisches Polyamid als überaus vorteilhaftes Flammschutzmittel, welches dem erfindungsgemäßen Trägermaterial zur Erfüllung brandschutztechnischer Anforderungen verhilft. Zudem weist aromatisches Polyamid eine nur geringe Sprödigkeit auf, insbesondere im Vergleich zu anderen Fasern aus Polyacrylnitril.

Insbesondere kann das Garn 35% bis 45% an aromatischem Polyamid enthalten, um ein bevorzugtes Verhältnis gegenüber dem restlichen Fasermaterial zu erhalten.

Besonders bevorzugt kann das Garn 40% an aromatischem Polyamid enthalten.

Nach einer bevorzugten Weiterentwicklung des erfindungsgemäßen Trägermaterials wird es als vorteilhaft angesehen, wenn das Garn des Gewebes 10% bis 30% Viskose enthält. Bei der hier zu verwendenden Viskose kann es sich in besonders bevorzugter Weise um Viskose FR ("Flame Retardant"), also um schwerentflammbare Viskosefasern handeln. Dies vor allem im Hinblick auf die Erfüllung brandschutztechnischer Anforderungen, insbesondere in der bevorzugten Kombination mit Faser aus aromatischem Polyamid, insbesondere Aramidfasern. Viskose erhöht im besonderen Maße die Geschmeidigkeit des Trägermaterials, was einer etwaigen Sprödheit vorteilhaft entgegenwirkt. Zudem dient Viskose innerhalb des erfindungsgemäßen Trägermaterials als Haftungsträger, so dass dieses auf einfache Weise beispielsweise mit einer dauerhaften Beschichtung ausgestattet werden kann.

Insbesondere kann das Garn 15% bis 25% an Viskose enthalten, um ein bevorzugtes Verhältnis gegenüber dem restlichen Fasermaterial zu erhalten.

Besonders bevorzugt kann das Garn 20% an Viskose enthalten.

Im Rahmen der Erfindung kann Viskose durch Wolle ergänzt oder in den zuvor genannten Größenordnungen ersetzt werden. Der Ersatz von Viskose durch Wolle weist ähnliche oder gleiche Eigenschaften wie zuvor beschrieben auf.

Im Rahmen der Erfindung kann Viskose durch Baumwolle ergänzt oder in den zuvor genannten Größenordnungen ersetzt werden. Der Ersatz von Viskose durch Baumwolle weist ähnliche oder gleiche Eigenschaften wie zuvor beschrieben auf, wobei Baumwolle in Gegenwart von Feuer ein Glimmen aufweisen kann. Insofern sollte der Anteil an Baumwolle auf maximal 20% reduziert werden oder gar völlig entfallen, sofern das Trägermaterial höchste brandschutztechnische Anforderungen erfüllen soll bzw. muss.

Gemäß einer vorteilhaften Zusammensetzung für das erfindungsgemäße Trägermaterial kann dessen Garn ausschließlich aromatisches Polyester sowie Viskose und aromatisches Polyamid, insbesondere Aramid, enthalten. Besonders bevorzugt kann das Garn 40% an aromatischem Polyester sowie 20% an Viskose und 40% an aromatischem Polyamid, insbesondere Aramid in Gestalt von Paraaramid oder Metaaramid, umfassen, was ein überaus vorteilhaftes Verhältnis in Bezug auf Haltbarkeit für das erfindungsgemäße Trägermaterial ermöglicht.

Ein günstiges spezifisches Gewicht für das Gewebe des erfindungsgemäßen Trägermaterials wird in einem Bereich von 100 g/m² bis 300 g/m² gesehen. Hierdurch ergibt sich eine vorteilhafte Performance, die insbesondere für den Einsatzzweck als Faltenbalgmaterial in Bezug auf die Dicke des Materials bei Werten unterhalb von 100 g/m² und oberhalb von 300 g/m² nicht mehr gegeben ist. So ist das Gewebe beispielsweise bei einem Gewicht oberhalb von 300 g/m² zu steif, unflexibel und zu dick, um die erforderliche Knickfähigkeit zu gewährleisten. Unterhalb von 100 g/m² ist dieses demgegenüber zu dünn, zu flexibel und zu leicht, um den Anforderungen beispielsweise in Bezug auf Formhaltung der Falten gerecht zu werden.

Insbesondere kann das Flächengewicht des Gewebes von 150 g/m² bis 250 g/m² reichen, um ein bevorzugtes Verhältnis in Bezug auf die gewünschte Performance zu erhalten. Besonders bevorzugt kann das Flächengewicht des Gewebes bei 200 g/m² liegen.

Mit Blick auf das zum Gewebe des Trägermaterials verarbeitete Garn ist vorgesehen, dass dessen Garnfeinheit von Nm 40/2 bis Nm 70/2 betragen kann. Hierbei handelt es sich um zwei miteinander verzwirnte Fäden mit einer jeweiligen Feinheit Garnnummer im Bereich von Nm 80 bis Nm 140. Erfindungsgemäß kann auch ein einfaches, also nicht gezwirntes, Garn eingesetzt werden, bevorzugt mit Garnnummern im Bereich von Nm 40/1 bis Nm 70/1.

Insbesondere kann das Garn eine Garnfeinheit von Nm 50/2 bis Nm 60/2 oder Nm 50/1 bis Nm 60/1 aufweisen, um ein bevorzugtes Verhältnis in Bezug auf die gewünschte Performance zu erhalten.

Besonders bevorzugt kann das Garn eine Garnfeinheit von Nm 55/2 bzw. Nm 55/1 aufweisen.

Das Gewebe weist gewöhnlich in eine Längsrichtung verlaufende Kettfäden und in eine Querrichtung zu diesen Kettfäden verlaufende Schussfäden auf. In Bezug auf die Fadendichte wird es als vorteilhaft angesehen, wenn diese von 27 bis 31 Kettfäden pro cm beträgt. D.h., dass die Anzahl der Kettfäden in Bezug auf einen Zentimeter von 27 bis 31 Fäden bzw. Garne beträgt.

Insbesondere kann die Fadendichte des Gewebes von 28 bis 30 Kettfäden pro cm betragen, um ein bevorzugtes Verhältnis in Bezug auf die gewünschte Performance zu erhalten.

Besonders bevorzugt kann die Fadendichte des Gewebes 29 Kettfäden pro cm betragen.

In Bezug auf die Fadendichte wird es in diesem Zusammenhang als vorteilhaft angesehen, wenn diese von 19 bis 23 Schussfäden pro cm beträgt. D.h., dass die Anzahl der Schussfäden in Bezug auf einen Zentimeter von 19 bis 23 Fäden bzw. Garne beträgt.

Insbesondere kann die Fadendichte des Gewebes von 20 bis 22 Schussfäden pro cm betragen, um ein bevorzugtes Verhältnis in Bezug auf die gewünschte Performance zu erhalten. Besonders bevorzugt kann die Fadendichte des Gewebes 21 Schussfäden pro cm betragen.

In Bezug auf die mögliche Webart des Gewebes wird es als vorteilhaft angesehen, wenn dieses eine Köperbindung, insbesondere mit der Bindungsformel K 2/1, aufweist. In Abhängigkeit davon, ob in Bezug auf die Anzahl der oben liegenden Fäden die Kettfäden oder die Schussfäden überwiegen, kann es sich zudem um einen Kettköper oder einen Schussköper handeln. Durch die bevorzugte Aufteilung der Kett- und Schussfäden von "2/1" ergibt sich ein vorteilhafter Kettköper, der auf seiner Oberseite mehr Kett- als Schussfäden aufweist.

Aufgrund der Köperbindung ("Köper" bzw. "Twill") ergibt sich das für diese Webart typische Muster mit parallel zueinander verlaufenden schrägen Linien (Köpergrat). Je nach Richtung dieses Grats kann das Gewebe einen S-Grad-Köper (von links oben nach rechts unten) oder einen Z-Grad-Köper (von links unten nach rechts oben) aufweisen. Das eigentliche Muster entsteht durch die Anordnung der Bindungspunkte von Kett- und Schussfäden, welches treppenartig angeordnet ist. Je nach Fadendichte des Gewebes verleiht dessen Köperbindung dem Trägermaterial an die jeweiligen Anforderungen anpassbare Eigenschaften, die beispielsweise von strapazierfähig über locker bis hin zu weich variieren können.

Grundsätzlich liegt der besondere Vorteil in der hohen Festigkeit von Geweben mit Köperbindung, welche insbesondere im Einsatz als Faltenbalgmaterial entsprechende Vorteile in Bezug auf Belastbarkeit und Langlebigkeit bieten. Selbstverständlich kann das Gewebe des erfindungsgemäßen Trägermaterials auch eine bzw. mehrere antistatische Fasern besitzen. Hierbei kann es sich um in der Regel synthetische Fasern handeln, die eine nur geringe oder nicht vorhandene Eigenschaft zur statischen Aufladung besitzen. Hierzu kann grundsätzlich jede Faser so ausgerüstet werden, dass diese elektrisch leitfähig ist bzw. antistatische Eigenschaften mit sich bringt . Auf diese Weise kann eine etwaige statische Aufladung des Trägermaterials wirksam verhindert werden.

Statische Aufladungen können sich beispielsweise durch Reibung ergeben, so wie sie etwa zwischen den Flanken der einzelnen Falten eines Faltenbalgs entstehen kann.

Das nunmehr vorgestellte erfindungsgemäße Trägermaterial weist überaus vorteilhafte Eigenschaften in Bezug auf dessen Festigkeit und Knickbeständigkeit auf, so dass sich außerordentlich hohe Standzeit insbesondere in den knickbelasteten Bereichen eines Erzeugnisses erreichen lassen, beispielsweise bei einem Faltenbalg.

Weiterhin ist die Erfindung auf ein Faltenbalgmaterial gerichtet, welches das zuvor beschriebene erfindungsgemäße Trägermaterial umfassen oder aus diesem gebildet sein kann. Somit dient das erfindungsgemäße Faltenbalgmaterial ausschließlich zur Herstellung von Faltenbälgen.

Die sich aus dem erfindungsgemäßen Faltenbalgmaterial ergebenden Vorteile wurden bereits zuvor im Zusammenhang mit der Vorstellung des erfindungsgemäßen Trägermaterials näher erläutert, so dass an dieser Stelle zunächst auf die vorherigen Ausführungen hierzu verwiesen wird.

Gemäß einer bevorzugten Weiterentwicklung des erfindungsgemäßen Faltenbalgmaterials kann das Trägermaterial eine wenigstens einseitige Beschichtung aufweisen. D.h., dass auf wenigstens eine Deckfläche bzw. -seite des Trägermaterials zumindest bereichsweise eine Beschichtung aufgebracht sein kann. Selbstverständlich kann eine solche Beschichtung auch beidseitig und insofern auf beiden voneinander weg weisenden Deckseiten des Trägermaterials zumindest bereichsweise angeordnet sein. Die Beschichtung kann auf die Oberfläche des Gewebes aufgebracht sein und/oder dieses zumindest teilweise durchtränken.

Als mögliche Beschichtungen sind beispielsweise solche denkbar, die die Dichtheit des Gewebes vor Fluiden und/oder dessen Beständigkeit gegenüber angreifenden Medien und/oder Temperaturen verbessern. Hierzu eignen sich Ausstattungen wie etwas PU- und/oder Silikonbeschichtungen. Denkbar ist auch eine zumindest teilweise Aluminisierung der Oberfläche. Die Beschichtung ermöglicht es, dass Stegrahmen (bspw. aus PVC) mit dem beschichteten Gewebe thermisch verschweißt, vernäht oder auch verklebt werden können.

Letztlich ist die Erfindung auf einen Faltenbalg gerichtet, der ein wie zuvor beschriebenes erfindungsgemäßes Faltenbalgmaterial umfasst oder aus diesem gebildet ist.

Die sich aus dem erfindungsgemäßen Faltenbalg ergebenden Vorteile wurden bereits zuvor im Zusammenhang mit der Vorstellung des erfindungsgemäßen Trägermaterials und/oder des erfindungsgemäßen Faltenbalgmaterials näher erläutert, so dass an dieser Stelle auf die vorherigen Ausführungen hierzu verwiesen wird.

Im Rahmen der Erfindung wird unter einem Faltenbalg sowohl eine umfangsseitig geschlossene als auch eine wenigstens einseitig offene Ausgestaltung verstanden. So kann ein Faltenbalg im Sinne der Erfindung eine einzelne gerade oder gekrümmte, insbesondere mehrfach gekrümmte, Wand ausbilden.

## Patentansprüche

1. Trägermaterial für einen Faltenbalg, insbesondere Faltenbalgträgermaterial, umfassend ein Gewebe aus zumindest bereichsweise miteinander gekreuzten Fäden, wobei die Fäden aus einem gezwirnten oder nicht gezwirnten Garn gebildet sind, welches Fasern aus aromatischem Polyester und wenigstens einem der nachfolgend aufgeführten Materialien aufweist:
- Viskose
- Wolle
- Baumwolle
- aromatisches Polyamid, insbesondere Aramid,
**dadurch gekennzeichnet,**
**dass** das Garn 30% bis 60% aromatisches Polyester enthält, insbesondere 35% bis 45%, bevorzugt 40%.

2. Trägermaterial nach Anspruch 1,
**dadurch gekennzeichnet,**
**dass** das Garn 30% bis 50% aromatisches Polyamid enthält, insbesondere 35% bis 45%, bevorzugt 40%.

3. Trägermaterial nach Anspruch 1 oder 2,
**dadurch gekennzeichnet,**
**dass** das Garn 10% bis 30% Viskose enthält, insbesondere 15% bis 25%, bevorzugt 20%.

4. Trägermaterial nach einem der vorhergehenden Ansprüche,
**dadurch gekennzeichnet,**
**dass** das Garn ausschließlich aromatisches Polyester sowie Viskose und aromatisches Polyamid enthält, insbesondere 40% aromatisches Polyester sowie 20% Viskose und 40% aromatisches Polyamid.

5. Trägermaterial nach einem der vorhergehenden Ansprüche,
**dadurch gekennzeichnet,**
**dass** das Gewebe ein spezifisches Gewicht von 100 g/m² bis 300 g/m², insbesondere von 150 g/m² bis 250 g/m², bevorzugt von 200 g/m² aufweist.

6. Trägermaterial nach einem der vorhergehenden Ansprüche,
**dadurch gekennzeichnet,**
**dass** das Garn eine Garnfeinheit von Nm 40/2 bis Nm 70/2, insbesondere von Nm 50/2 bis Nm 60/2, bevorzugt von Nm 55/2 oder von Nm 40/1 bis Nm 70/1, insbesondere von Nm 50/1 bis Nm 60/1, bevorzugt von Nm 55/1 aufweist.

7. Trägermaterial nach einem der vorhergehenden Ansprüche,
**dadurch gekennzeichnet,**
**dass** das Gewebe in eine Längsrichtung verlaufende Kettfäden und in eine Querrichtung zu den Kettfäden verlaufende Schussfäden aufweist, wobei die Fadendichte des Gewebes von 27 bis 31, insbesondere von 28 bis 30, bevorzugt 29 Kettfäden pro cm und von 19 bis 23, insbesondere 20 bis 22, bevorzugt 21 Schussfäden pro cm beträgt.

8. Trägermaterial nach einem der vorhergehenden Ansprüche,
**dadurch gekennzeichnet,**
**dass** das Gewebe eine Köperbindung, insbesondere mit der Bindungsformel K 2/1, aufweist.

9. Trägermaterial nach einem der vorhergehenden Ansprüche,
**dadurch gekennzeichnet,**
**dass** das Gewebe eine antistatische Faser besitzt.

10. Faltenbalgmaterial, umfassend ein Trägermaterial nach einem der vorhergehenden Ansprüche.

11. Faltenbalgmaterial nach Anspruch 10,
**dadurch gekennzeichnet,**
**dass** das Trägermaterial eine wenigstens einseitige Beschichtung aufweist.

12. Faltenbalg, umfassend ein Faltenbalgmaterial nach Anspruch 10 oder 11.

## Claims

1. Carrier material for a bellows, in particular bellows carrier material, comprising a woven fabric of threads crisscrossed with one another in at least some regions, wherein the threads are formed from a twisted or non-twisted yarn which has fibres of aromatic polyester and at least one of the materials detailed below:
- viscous
- wool
- cotton
- aromatic polyamide, in particular aramid,
**characterised in that**
the yarn contains 30% to 60%, in particular 35% to 45%, and preferably 40%, aromatic polyester.

2. Carrier material according to claim 1
**characterised in that**
the yarn contains 30% to 50%, in particular 35% to 45% and preferably 40%, aromatic polyamide.

3. Carrier material according to claim 1 or 2
**characterised in that**
the yarn contains 10% to 30%, in particular 15% to 25% and preferably 20%, viscous.

4. Carrier material according to one of the preceding claims
**characterised in that**
the yarn contains solely aromatic polyester as well as viscous and aromatic polyamide, in particular 40% aromatic polyester as well as 20% viscous and 40% aromatic polyamide.

5. Carrier material according to one of the preceding claims
**characterised in that**
the woven fabric has a specific weight of 100 g/m² to 300 g/m², in particular 150 g/m² to 250 g/m², preferably of 200 g/m².

6. Carrier material according to one of the preceding claims
**characterised in that**
the yarn has a yarn count of Nm 40/2 to Nm 70/2, in particular of Nm 50/2 to Nm 60/2, preferably of Nm 55/2 or of Nm 40/1 to Nm 70/1, in particular of Nm 50/1 to Nm 60/1, preferably of Nm 55/1.

7. Carrier material according to one of the preceding claims
**characterised in that**
the woven fabric has warp threads running in the longitudinal direction, and weft threads running transversely to the warp threads, wherein the thread density of the woven fabric amounts to 27 to 31, in particular 28 to 30, preferably 29, warp threads per cm, and 19 to 23, in particular 20 to 22, preferably 21, weft threads per cm.

8. Carrier material according to one of the preceding claims
**characterised in that**
the woven fabric has a twill weave, in particular with the bonding formula K 2 /1.

9. Carrier material according to one of the preceding claims
**characterised in that**
the woven fabric has an anti-static fibre.

10. Bellows material, comprising a carrier material according to one of the preceding claims.

11. Bellows material according to claim 10
**characterised in that**
the carrier material has a coating on at least one side.

12. Bellows comprising a bellows material according to claim 10 or 11.

## Revendications

1. Substrat destiné à un soufflet-accordéon, notamment un substrat pour soufflet-accordéon, comprenant un tissu constitué, au moins par zone, de fils croisés entre eux, dans lequel les fils sont constitués d'un filé retordu ou non retordu, qui présente des fibres de polyester aromatique et au moins une des matières citées ci-après :
- viscose
- laine
- coton
- polyamide aromatique, notamment aramide,
**caractérisé en ce**
**que** le filé contient 30 % à 60 % de polyester aromatique, notamment 35 % à 45 %, de préférence 40 %.

2. Substrat selon la revendication 1,
**caractérisé en ce**
**que** le filé contient 30 % à 50 % de polyester aromatique, notamment 35 % à 45 %, de préférence 40 %.

3. Substrat selon la revendication 1 ou 2,
**caractérisé en ce**
**que** le filé contient 10 % à 30 % de viscose, notamment 15 % à 25 %, de préférence 20 %.

4. Substrat selon l'une quelconque des revendications précédentes,
**caractérisé en ce**
**que** le filé contient uniquement de polyester aromatique ainsi que de viscose et de polyester aromatique, notamment 40 % de polyester aromatique ainsi que 20 % de viscose et 40 % de polyester aromatique.

5. Substrat selon l'une quelconque des revendications précédentes,
**caractérisé en ce**
**que** le tissu présente un poids spécifique de 100 g/m² à 300 g/m², notamment de 150 g/m² à 250 g/ m², de préférence de 200 g/m².

6. Substrat selon l'une quelconque des revendications précédentes,
**caractérisé en ce**
**que** le filé présente un titre du filé de Nm 40/2 à Nm 70/2, notamment de Nm 50/2 à Nm 60/2, de préférence de Nm 55/2 ou de Nm 40/1 à Nm 70/1, notamment de Nm 50/1 à Nm 60/1, de préférence de Nm 55/1.

7. Substrat selon l'une quelconque des revendications précédentes,
**caractérisé en ce**
**que** le tissu présente des fils de chaîne s'étendant dans une direction longitudinale et des fils de trame s'étendant dans une direction transversale par rapport aux fils de chaîne, dans lequel la densité des fils du tissu est de 27 à 31, notamment de 28 à 30, de préférence de 29 fils de chaîne par cm, et de 19 à 23, notamment de 20 à 22, de préférence de 21 fils de trame par cm.

8. Substrat selon l'une quelconque des revendications précédentes,
**caractérisé en ce**
**que** le tissu présente une armure sergée, notamment avec la formule d'armure K 2/1.

9. Substrat selon l'une quelconque des revendications précédentes,
**caractérisé en ce**
**que** le tissu comporte une fibre antistatique.

10. Matière de soufflet-accordéon, comprenant un substrat selon l'une quelconque des revendications précédentes.

11. Matière de soufflet-accordéon selon la revendication 10,
**caractérisé en ce**
**que** le substrat présente un revêtement sur au moins une face.

12. Soufflet-accordéon, comprenant une matière de soufflet-accordéon selon la revendication 10 ou 11.
